(19) Europäisches Patentamt
European Patent Office
Office européen des brevets

(11) **EP 4 765 673 A1**

(12) **EUROPEAN PATENT APPLICATION**
published in accordance with Art. 153(4) EPC

(43) Date of publication:
**24.06.2026  Bulletin 2026/26**

(21) Application number: 24865850.2

(22) Date of filing: **11.09.2024**

(51) International Patent Classification (IPC):
*H04B 7/185* [(2006.01)]   *H04B 17/345* [(2015.01)]
*H04B 17/373* [(2015.01)]   *G06T 17/20* [(2006.01)]

(52) Cooperative Patent Classification (CPC):
**G06T 17/20; H04B 7/185; H04B 17/345;
H04B 17/373**

(86) International application number:
**PCT/KR2024/013830**

(87) International publication number:
**WO 2025/058411 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **14.09.2023  KR 20230122158**

(71) Applicant: SPACEMAP Inc.
**Seoul 04763 (KR)**

(72) Inventors:
• **KIM, Deok Soo**
  **Seoul 04971 (KR)**
• **RYU, Joong Hyun**
  **Suwon-si Gyeonggi-do 16295 (KR)**
• **CHOI, Seung Hwan**
  **Seoul 04805 (KR)**

(74) Representative: **Dr. Gassner & Partner mbB
Wetterkreuz 3
91058 Erlangen (DE)**

(54) **SYSTEM AND METHOD FOR PREDICTING AND AVOIDING WIRELESS COMMUNICATION INTERFERENCE BETWEEN GROUND STATION AND COMMUNICATION SATELLITE**

(57)    Disclosed is a method for predicting and avoiding wireless communication interference between a ground station and a communication satellite. The method for predicting and avoiding wireless communication interference comprises: calculating a three-dimensional Voronoi diagram for a communication satellite, which has entered a communicable area of a ground station, and neighboring satellites; and extracting a satellite of interest on the basis of the distance between a Voronoi diagram cell including the communication satellite and the neighboring satellites.

FIG. 1

## Description

[Technical Field]

The present invention relates to a system and a method for predicting and avoiding wireless communication interference between a ground station and a communication satellite, and more particularly, to a system and a method for predicting and avoiding wireless communication interference to predict the communication interference caused by neighboring satellites during wireless communication between a communication satellite and a ground station, and control the wireless communication of the communication satellite to prevent the communication interference.

[Background Art]

Since Sputnik in 1957, thousands of satellites have been launched, and it is predicted that over 100,000 new satellites will be launched over the next decade. The primary missions of these satellites are remote detection for observing and measuring the Earth or the cosmos, and communication with ground stations or satellites. Another important method has been added to the measurement in recent research on space-based space-situational awareness (SSA). The above both missions generate and transmit data and accordingly require uplinks and downlinks between satellites and ground stations. Other types of satellites, such as security and defense satellites, generally have the same functions. These functions are also required to be included in the emerging blue ocean called In-Orbit Service, Assembly, Manufacturing (ISAM).

In principle, the satellite communication uses two media: radio frequency (RF) and optics. RF has played a major role for a long time in space communications and has advantages in easiness, convenience and low cost, but also has its drawbacks. RF is vulnerable to hacking and jamming because RF interference (RFI) may be easily designed and implemented. Because more satellites have been deployed in the cosmos and a spectrum space has been also more crowded due to RF for communications with ground stations and other satellites, RFI may cause serious communication disruption. A satellite operator may experience instances of being unable to download images due to RFI, and this phenomenon may become more noticeable as more satellite orbits, such as Stralink, Oneweb and Planet, are generated. In addition, RF itself is a limited resource that can be shared by everyone, but a new satellite requires an ITU license.

Whereas optical communications using lasers have been popular due to many advantages, and have a data bandwidth much higher than that of RF. In addition, it is more resistant to hacking, jamming, and interference compared to RF, and does not require the ITU license. For this reason, laser communications between a satellite and a ground station and laser communications between satellites through inter-satellite links (ISL) have become a blue ocean.

However, due to the aforementioned advantages, RF is expected to remain one of the major media despite the advantages of optical communications. In particular, in a heterogeneous space environment in which multiple operators operate multiple satellites in multiple orbits, RFI-related issues are critical and are expected to be critical to the safety and sustainability of space operations. Accordingly, it is necessary to design an interference-free satellite operation environment utilizing RF communications. However, there are no good computational methods for designing satellite communication systems that are free from RFI or less vulnerable to RFI and for predicting RFI and avoiding predicted interference, and thus a research therefor is required.

[Disclosure]

[Technical Problem]

The present invention provides a system and a method for predicting and avoiding wireless communication interference to predict the communication interference caused by neighboring satellites during wireless communication between a communication satellite and a ground station and control the wireless communication of the communication satellite to prevent the communication interference.

In addition, the present invention provides a system and a method for predicting and avoiding wireless communication interference so as to predict an occurrence of wireless communication interference efficiently, accurately, and in real time.

[Technical Solution]

The method for predicting and avoiding wireless communication interference according to the present invention calculates a three-dimensional Voronoi diagram for a communication satellite, which has entered a communicable area of a ground station, and neighboring satellites; and extracts a satellite of interest based on the distance between a Voronoi diagram cell including the communication satellite and the neighboring satellites.

In addition, the communication satellite and the neighboring satellites may move along orbits, respectively.

In addition, the satellite of interest may be extracted based on shortest distances between boundary surfaces of the Voronoi diagram cell and the neighboring satellites.

In addition, the Voronoi diagram cell may have a shape changed depending on movements of the communication satellite and the neighboring satellites.

In addition, communication interference between the communication satellite and the ground station due to signals generated from the satellite of interest may be predicted by calculating an angular distance between a first baseline connecting the communication satellite to the ground station and a second baseline connecting the satellite of interest to the ground station, and comparing the angular distance with an angle tolerance.

In addition, wireless communication between the communication satellite and the ground station may be temporarily suspended when the communication interference is predicted.

In addition, a relay satellite may be selected from among the neighboring satellites when the communication interference is predicted, and wireless communication may be performed between the communication satellite and the ground station via the relay satellite.

In addition, when the communication interference is predicted, the communication satellite may perform wireless communication with another ground station adjacent to the ground station.

The system for predicting and avoiding wireless communication interference according to the embodiment of the present invention includes: a frequency interference prediction unit that calculates a three-dimensional Voronoi diagram for a communication satellite, which has entered a communicable area of a ground station, and neighboring satellites, extracts a satellite of interest based on the distance between a Voronoi diagram cell including the communication satellite and the neighboring satellites, and predicts communication interference between the communication satellite and the ground station due to signals generated from the satellite of interest; and a communication control unit that controls wireless communication of the communication satellite, when the communication interference is predicted, to enable the wireless communication between the communication satellite and the ground station by avoiding the communication interference.

[Advantageous Effects]

According to the present invention, the system and the method for predicting and avoiding wireless communication interference can extract a satellite of interest by calculating a three-dimensional Voronoi diagram for a communication satellite, which has entered a communicable area of a ground station, and neighboring satellites, predict communication interference caused by the satellite of interest during wireless communication between the communication satellite and the ground station, and control wireless communication of the communication satellite, when the communication interference is predicted, to enable the wireless communication between the communication satellite and the ground station by avoiding the communication interference.

In addition, according to the present invention, a satellite of interest can be extracted by calculating a three-dimensional Voronoi diagram for a communication satellite, which has entered a communicable area of a ground station, and neighboring satellites, and communication interference between the above satellites can be predicted, so that an occurrence of wireless communication interference can be predicted efficiently, accurately, and in real time.

[Description of Drawings]

FIG. 1 is a view showing a detailed configuration of a system for predicting and avoiding wireless communication interference according to the embodiment of the present invention.
FIG. 2 is a view showing a communicable area of a ground station and artificial satellites moving along a set orbit in space according to the embodiment of the present invention.
FIG. 3 is a view showing a process of extracting satellites of interest according to the embodiment of the present invention.
FIG. 4 is a view showing a process of extracting a communication interference-possible satellite according to the embodiment of the present invention.
FIGS. 5 to 7 are views for explaining a communication control method for avoiding communication interference according to various embodiments of the present invention.
FIG. 8 is a flow chart showing a method for predicting and avoiding wireless communication interference between a ground station and a communication satellite according to the embodiment of the present invention.

[Best Mode]

The method for predicting and avoiding wireless communication interference according to the present invention calculates a three-dimensional Voronoi diagram for a communication satellite, which has entered a communicable area of a ground station, and neighboring satellites; and extracts a satellite of interest based on the distance between a Voronoi diagram cell including the communication satellite and the neighboring satellites.

[Mode for Invention]

Hereinafter, exemplary embodiments of the present invention will be described in detail with reference to the accompanying drawings. However, the technical idea of the present invention is not limited to the exemplary embodiments described herein and may be embodied in other forms. Further, the embodiments are provided to enable contents disclosed herein to be thorough and complete and provided to enable those skilled in the art to fully understand the idea of the present invention.

In the specification, when one component is mentioned as being on another component, it signifies that the one component may be placed directly on another component or a third component may be interposed therebetween. In addition, in drawings, thicknesses of films and regions may be exaggerated to effectively describe the technology of the present invention.

In addition, although terms such as first, second and third are used herein to describe various components in various embodiments of the present specification, the components will not be limited by the terms. The above terms are used merely to distinguish one component from another. Accordingly, a first component referred to in one embodiment may be referred to as a second component in another embodiment. Each embodiment described and illustrated herein may also include a complementary embodiment. In addition, the term "and/or" is used herein to include at least one of the components listed before and after the term.

The singular expression herein includes a plural expression unless the context clearly specifies otherwise. In addition, it will be understood that the term such as "include" or "have" herein is intended to designate the presence of feature, number, step, component, or a combination thereof recited in the specification, and does not preclude the possibility of the presence or addition of one or more other features, numbers, steps, components, or combinations thereof. In addition, the term "connection" is used herein to include both indirectly connecting a plurality of components and directly connecting the components.

In addition, in the following description of the embodiments of the present invention, the detailed description of known functions and configurations incorporated herein will be omitted when it possibly makes the subject matter of the present invention unclear unnecessarily.

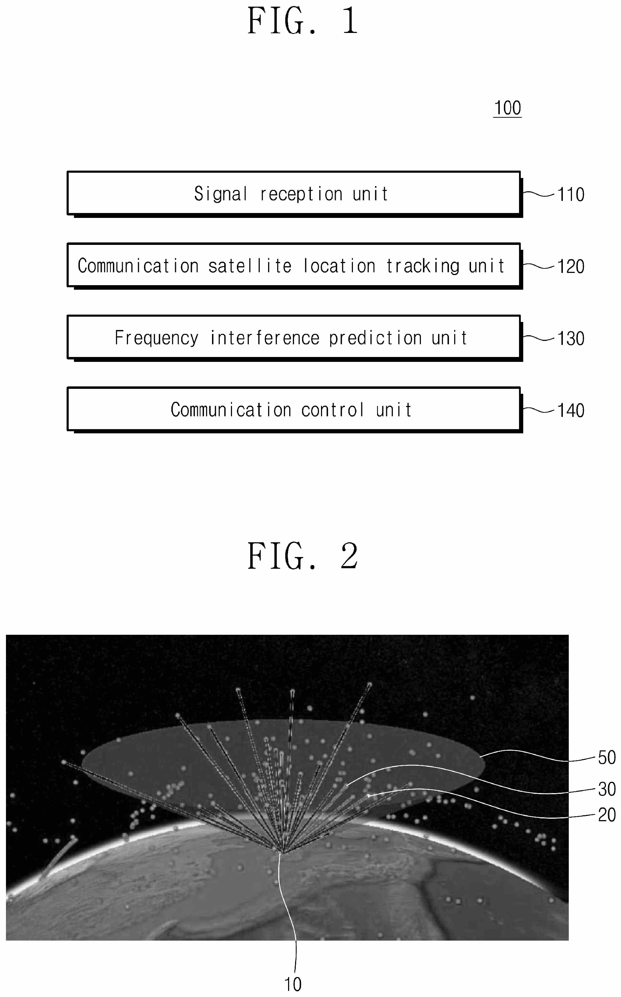

FIG. 1 is a view showing a detailed configuration of a system for predicting and avoiding wireless communication interference according to the embodiment of the present invention; and FIG. 2 is a view showing a communicable area of a ground station and artificial satellites moving along a set orbit in space according to the embodiment of the present invention.

Referring to FIGS. 1 and 2, a system 100 for predicting and avoiding wireless communication interference between a ground station and a communication satellite according to the embodiment of the present invention predicts communication interference caused by neighboring satellites 30 during wireless communication between a ground station 10 and communication satellites 20, and controls the wireless communication of the communication satellites 20 to prevent the communication interference.

The ground station 10 is installed on the ground and has an antenna capable of communicating with the artificial satellites 20 and 30 moving along set orbits in space. The antenna has a spatial range, which is called a communicable area 50, for receiving signals from the artificial satellites 20 and 30. The communicable area 50 has a cone shape centered on the ground station 10 and directed toward space, and the facing direction may be changed depending on movements of the antenna. The antenna may receive radio frequencies from the artificial satellites 20 and 30.

The communication satellite 20 refers to a satellite periodically communicating with the ground station 10 while moving along a set orbit in space, and the neighboring satellite 30 refers to a satellite having entered the communicable area 50 of the ground station 10 while moving along a set orbit in space.

The system 100 for predicting and avoiding wireless communication interference includes a signal reception unit 110, a communication satellite location tracking unit 120, a frequency interference prediction unit 130, and a communication control unit 140.

The signal reception unit 110 receives real-time three-dimensional (3D) spatial information of the artificial satellites 20 and 30 moving in space, location information of the ground station 10, and 3D spatial information of the communicable area 50.

The communication satellite location tracking unit 120 tracks a location of a communication satellite 20 when the communication satellite 20 enters the communicable area 50, and tracks locations of neighboring satellites 30 located within the communicable area 50.

The frequency interference prediction unit 130 predicts a presence of radio frequency interference (RFI) caused by the neighboring satellites 30 during wireless communication between the communication satellite 20 and the ground station 10 depending on movements of the communication satellite 20.

Specifically, when the communication satellite 20 enters the communicable area 50, the frequency interference prediction unit 130 calculates a three-dimensional Voronoi diagram for the communication satellite 20 and the neighboring satellites 30 located within the communicable area 50 in simultaneous time. When the three-dimensional Voronoi diagram is calculated, a Voronoi diagram cell is formed centered on the communication satellite 20 and each of the neighboring satellites 30. Boundaries of the Voronoi diagram cells are defined when adjacent cells face each other to form boundary surfaces. The three-dimensional Voronoi diagram is continuously calculated until the communication satellites 20 leave the communicable area 50, and shapes of the Voronoi diagram cells are changed in real time due to the movements of the communication satellite 20 and the neighboring satellites 30.

The frequency interference prediction unit 130 extracts satellites of interest by using the Voronoi diagram cells.

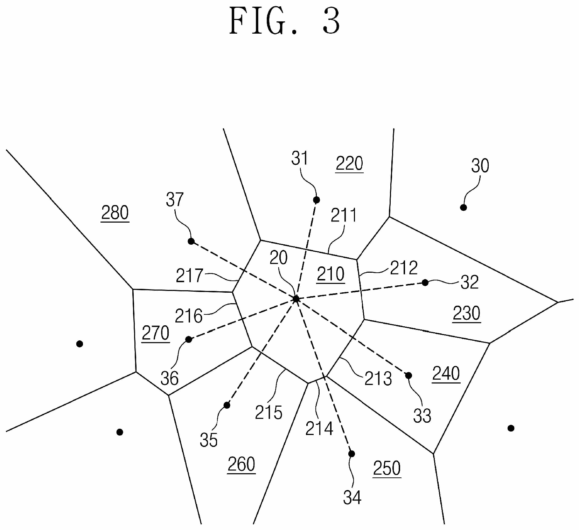

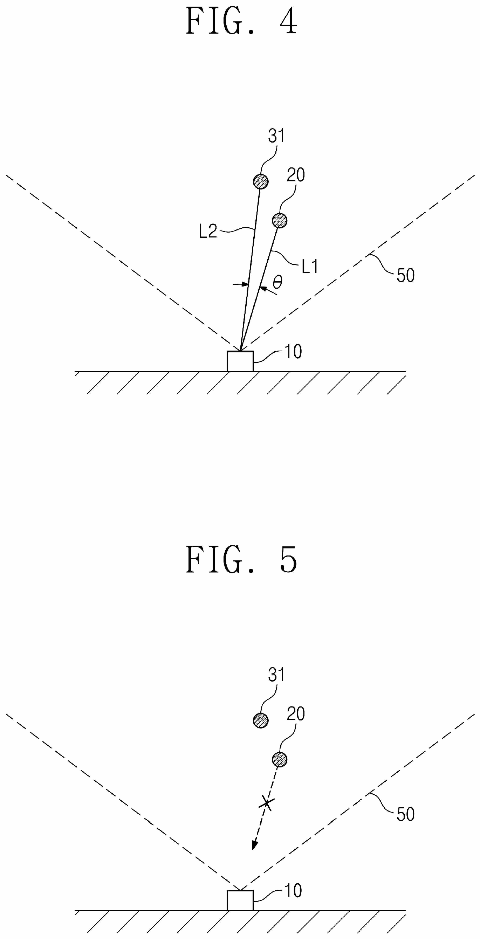

FIG. 3 is a view showing a process of extracting satellites of interest according to the embodiment of the present invention; and FIG. 4 is a view showing a process of extracting a communication interference-possible satellite according to the embodiment of the present invention.

Referring to FIGS. 3 and 4, the frequency interference prediction unit 130 extracts neighboring satellites 31 to 37, as satellites of interest, which are included in Voronoi diagram cells 220 to 280 sharing boundary surfaces 211 to 217 with a Voronoi diagram cell 210 including the communication satellite 20, respectively. The satellites of interest 31 to 37 refer to satellites, among the neighboring satellites 30, highly likely to cause communication interference during communication between the communication satellite 20 and the ground station 10.

The frequency interference prediction unit 130 extracts satellites of interest satisfying communication distance conditions with the boundary surfaces 220 to 280 among the neighboring satellites 31 to 37 included in the Voronoi diagram cells 220 to 280 sharing the boundary surfaces 211 to 217 with the Voronoi diagram cell 210 including the communication satellite 20, respectively.

The frequency interference prediction unit 130 predicts communication interference between the communication satellite 20 and the ground station 10 caused by signals generated from the satellites of interest 31 to 37. Specifically, the frequency interference prediction unit 130 predicts the communication interference by calculating an angular distance $\theta$ between a first baseline L1 connecting the communication satellite 20 to the ground station 10 and a second baseline L2 connecting the satellite of interest 31 to the ground station 10, and comparing the angular distance $\theta$ with an angular tolerance $\tau$. According to the embodiment, the frequency interference prediction unit 130 predicts the communication interference by using Equation 1.

[Equation 1]

$$RFI = f(G, F, P)$$

Herein, RFI denotes radio frequency interference, G denotes geometry, F denotes frequency of a communication signal, and P denotes power density of the communication signal. G refers to the angular distance $\theta$ between the first baseline L1 connecting the communication satellite 20 and the second baseline L2 connecting the satellite of interest 31 from the ground station 10 as a starting point. Since G changes over time t according to the movements of the communication satellite 20 and the satellite of interest 31, G may be expressed as a function G(t). F and P are constants.

When the angular distance $\theta$ between the communication satellite 20 and the satellite of interest 31 is within a range of the angular tolerance $\tau$, and when the requirements for frequency F and power density P are met, the frequency interference prediction unit 130 predicts that the communication signal generated from the satellite of interest 31 may cause interference in the communication between the communication satellite 20 and the ground station 10, and tracks the satellite of interest 31 as a communication interference-possible satellite.

While the communication interference conditions maintain between the communication satellite 20 and the communication interference-possible satellite 31, the communication control unit 140 controls wireless communication of the communication satellite 20 to avoid communication interference and enable wireless communication between the communication satellite 20 and the ground station 10.

FIGS. 5 to 7 are views for explaining a communication control method for avoiding communication interference according to various embodiments of the present invention.

First, referring to FIG. 5, the communication control unit 140 may control the communication satellite 20 to temporarily suspend the wireless communication between the communication satellite 20 and the ground station 10 while the communication interference conditions maintain.

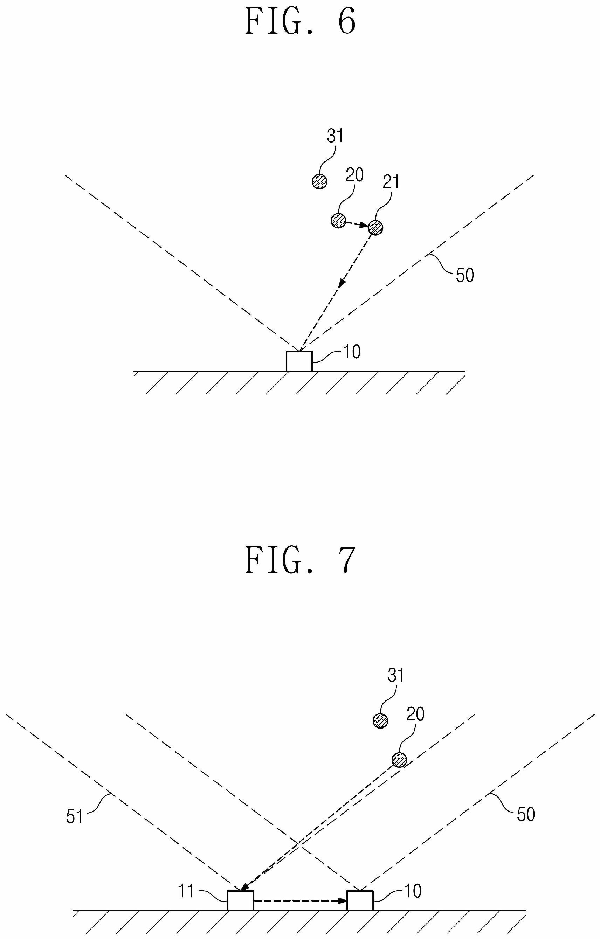

Referring to FIG. 6, while the communication interference conditions maintain, the communication control unit 140 may select a satellite, as a relay satellite 21, which does not cause communication interference between the communication satellite 20 and the ground station 10 among the neighboring satellites, and control the communication satellite to perform the wireless communication between the communication satellite 20 and the ground station 10 via the relay satellite 21.

Referring to FIG. 7, the communication control unit 140 may control the communication satellite 20 to perform wireless communication with the ground station 10 via another ground station 11, while the communication interference conditions maintain.

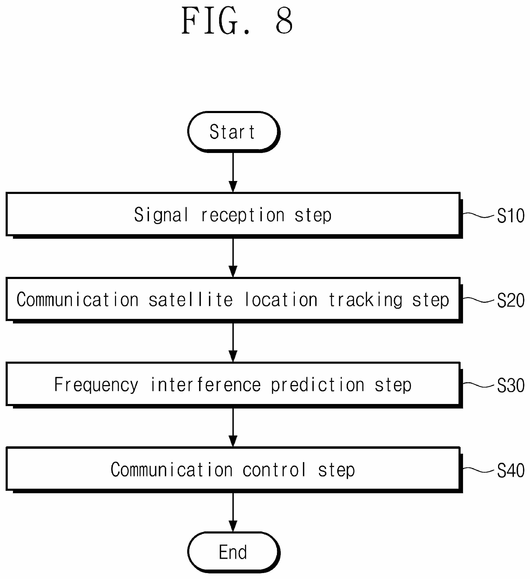

FIG. 8 is a flow chart showing a method for predicting and avoiding wireless communication interference between a ground station and a communication satellite according to the embodiment of the present invention.

Referring to FIG. 8, the method for predicting and avoiding wireless communication interference between a ground station and a communication satellite includes: a signal reception step S10, a communication satellite location tracking step S20, a frequency interference prediction step S30, and a communication control step S40.

The signal reception step S10 includes receiving real-time three-dimensional (3D) spatial information of the artificial satellites 20 and 30 moving in space, location information of the ground station 10, and 3D spatial information of the communicable area 50.

The communication satellite location tracking step S20 includes tracking a location of the communication satellite 20 when the communication satellite 20 enters the communicable area 50, and tracking locations of the neighboring satellites 30 located within the communicable area 50.

The frequency interference prediction step S30 includes calculating a three-dimensional Voronoi diagram for the communication satellite 20 and the neighboring satellites 30 located within the communicable area 50 in simultaneous time when the communication satellite 20 enters the communicable area 50. When the three-dimensional Voronoi diagram is calculated, a Voronoi diagram cell is formed centered on the communication satellite 20 and each of the neighboring satellites 30. Boundaries of the Voronoi diagram cells are defined when adjacent cells face each other to form boundary surfaces. The three-dimensional Voronoi diagram is continuously calculated until the communication satellites 20 leave the communicable area 50, and shapes of the Voronoi diagram cells are changed in real time due to the movements of the communication satellite 20 and the neighboring satellites 30.

In addition, the frequency interference prediction step S30 includes extracting neighboring satellites 31 to 37, as satellites of interest, which are included in Voronoi diagram cells 220 to 280 sharing boundary surfaces 211 to 217 with a Voronoi diagram cell 210 including the communication satellite 20, respectively. According to the embodiment, satellites of interest 31 to 37 satisfying communication distance conditions with the boundary surfaces 211 to 217 are extracted from among the neighboring satellites included in the Voronoi diagram cells 220 to 280 sharing the boundary surfaces 211 to 217 with the Voronoi diagram cell 210 including the communication satellite 20, respectively.

In addition, the frequency interference prediction step S30 includes predicting communication interference between the communication satellite 20 and the ground station 10 caused by signals generated from the satellites of interest 31 to 37. Specifically, the frequency interference prediction step S30 includes predicting communication interference by calculating an angular distance $\theta$ between a first baseline L1 connecting the communication satellite 20 to the ground station 10 and a second baseline L2 connecting the satellite of interest 31 to 37 to the ground station 10, and by comparing the angular distance $\theta$ with an angular tolerance $\tau$. When the angular distance $\theta$ between the communication satellite 20 and the satellite of interest 31 to 37 is within a range of the angular tolerance $\tau$, and when the requirements for frequency and power density are met, it is predicted that the communication signal generated from the satellite of interest 31 to 37 may cause interference in the communication between the communication satellite 20 and the ground station 10, and the satellite of interest 31 is tracked as a communication interference-possible satellite.

The communication control step S40 includes controlling wireless communication of the communication satellite, while the communication interference conditions maintain between the communication satellite 20 and the communication interference-possible satellite 31, to avoid communication interference and enable wireless communication between the communication satellite 20 and the ground station 10.

According to one example, the communication control step S40, while the communication interference conditions maintain, may control the communication satellite 20 to temporarily suspend the wireless communication between the communication satellite 20 and the ground station 10.

According to another example, the communication control step S40, while the communication interference conditions maintain, may select a satellite 21, as a relay satellite, which does not cause communication interference between the communication satellite 20 and the ground station 10 among the neighboring satellites, and control the communication satellite 20 to perform the wireless communication between the communication satellite 20 and the ground station 10 via the relay satellite 21.

According to another embodiment, the communication control step S40, while the communication interference conditions maintain, may control the communication satellite 20 to perform wireless communication with the ground station 10 through another ground station 11.

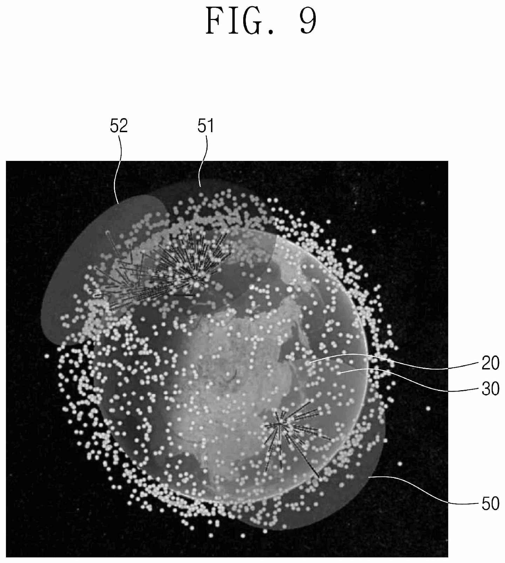

FIG. 9 is a view for explaining a process in which communication interference of a communication satellite owned and operated by the Korea Aerospace Research Institute (KARI) is predicted and avoided by using the method for predicting and avoiding wireless communication interference according to the embodiment of the present invention.

Referring to FIG. 9, ground stations located in Jeju Island of South Korea, Svalbard of Norway, and Neustrelitz of Germany are selected. The range of antennas capable of communication from the above ground stations is assumed to be 120 degrees. In FIG. 19, the yellow area 50 indicates the communicable range of the antenna installed in Jeju Island of Korea, the blue area 51 indicates the communicable range of the antenna installed in Svalbard of Norway, and the green area 52 indicates the communicable range of the antenna installed in Neustrelitz of Germany. These three ground stations are operated by the Korea Aerospace Research Institute, and four satellites capable of communicating with the ground stations are designated as communication satellites. The communication satellites are indicated by red dots, and neighboring satellites are indicated by green dots. Hereinafter, the process of predicting and avoiding communication interference between the ground station installed in Jeju Island of South Korea and the communication satellite will be described. The method for predicting and avoiding communication interference may be applied to the ground stations installed in Svalbard of Norway and Neustrelitz of Germany in the same manner.

When a communication satellite 20 enters the yellow area 50, a three-dimensional Voronoi diagram is calculated for the communication satellite 20 and the neighboring satellites 30 located within the yellow area in simultaneous time. In addition, satellites of interest, which satisfy communication distance conditions between boundary surfaces of Voronoi diagram cells centered on the communication satellite 20 and the neighboring satellites, are extracted. The extraction of satellites of interest continues until the communication satellite 20 leaves the yellow area 50.

Based on movements of the communication satellite 20 and the satellite of interest, an angular distance between a first baseline connecting the communication satellite 20 to the ground station and a second baseline connecting the satellite of interest 31 to the ground station is calculated, and the angular distance is compared with an angle tolerance, thereby predicting communication interference.

When the angular distance is within the angular tolerance, the wireless communication of the communication satellite is controlled to prevent communication interference.

According to one example, while the communication interference conditions maintain, the communication satellite is controlled to temporarily suspend the wireless communication between the communication satellite 20 and the ground station.

According to another example, while the communication interference conditions maintain, another communication satellite that does not cause communication interference with the ground station is selected as a relay satellite among communication satellites, and the wireless communication is controlled to be performed through the relay satellite.

According to still another example while the communication interference conditions maintain, a communications satellite is controlled to perform wireless communicate with another ground station adjacent to the ground station.

Although the present invention has been described in detail with reference to the preferred embodiments, the present invention is not limited to the specific embodiments and will be interpreted by the following claims. Further, it will be apparent that a person having ordinary skill in the art may carry out various deformations and modifications for the embodiments described as above within the scope without departing from the present invention.

[Industrial Applicability]

The system for predicting and avoiding wireless communication interference according to the embodiment of the present invention may be used for wireless communication between communication satellites and ground stations.

**Claims**

1.  A method for predicting and avoiding wireless communication interference, the method comprising:

    calculating a three-dimensional Voronoi diagram for a communication satellite, which has entered a communicable area of a ground station, and neighboring satellites; and
    extracting a satellite of interest based on a distance between a Voronoi diagram cell including the communication satellite and the neighboring satellites.

2.  The method of claim 1, wherein the communication satellite and the neighboring satellites move along orbits, respectively.

3.  The method of claim 1, wherein extracting the satellite of interest satisfying a communication distance condition between boundary surfaces of the Voronoi diagram cell and the neighboring satellites.

4.  The method of claim 1, wherein the Voronoi diagram cell has a shape changed depending on movements of the communication satellite and the neighboring satellites.

5.  The method of claim 1, further comprising:

    calculating an angular distance between a first baseline connecting the communication satellite to the ground station and a second baseline connecting the satellite of interest to the ground station, and comparing the angular distance with an angle tolerance,
    thereby predicting communication interference between the communication satellite and the ground station due to signals generated from the satellite of interest.

6.  The method of claim 5, wherein, when the communication interference is predicted, wireless communication between the communication satellite and the ground station is temporarily suspended.

7.  The method of claim 5, wherein, when the communication interference is predicted, a relay satellite is selected from the neighboring satellites, and wireless communication is performed between the communication satellite and the ground station via the relay satellite.

8.  The method of claim 5, wherein, when the communication interference is predicted, the communication satellite performs wireless communication with another ground station adjacent to the ground station.

9. A system for predicting and avoiding wireless communication interference, the system comprising:

a frequency interference prediction unit that calculates a three-dimensional Voronoi diagram for a communication satellite, which has entered a communicable area of a ground station, and neighboring satellites,
extracts a satellite of interest based on the distance between a Voronoi diagram cell including the communication satellite and the neighboring satellites, and
predicts communication interference between the communication satellite and the ground station due to signals generated from the satellite of interest; and
a communication control unit that controls wireless communication of the communication satellite, when the communication interference is predicted, to enable the wireless communication between the communication satellite and the ground station by avoiding the communication interference.

# FIG. 1

100

| Signal reception unit | ~110 |

| Communication satellite location tracking unit | ~120 |

| Frequency interference prediction unit | ~130 |

| Communication control unit | ~140 |

# FIG. 2

# FIG. 3

# FIG. 4

# FIG. 5

# FIG. 6

# FIG. 7

# FIG. 8

Start

↓

| Signal reception step | S10 |

↓

| Communication satellite location tracking step | S20 |

↓

| Frequency interference prediction step | S30 |

↓

| Communication control step | S40 |

↓

End

# FIG. 9

## INTERNATIONAL SEARCH REPORT

| International application No. |
|---|
| **PCT/KR2024/013830** |

| A. | CLASSIFICATION OF SUBJECT MATTER |
|---|---|

**H04B 7/185**(2006.01)i; **H04B 17/345**(2015.01)i; **H04B 17/373**(2015.01)i; **G06T 17/20**(2006.01)i

According to International Patent Classification (IPC) or to both national classification and IPC

| B. | FIELDS SEARCHED |
|---|---|

Minimum documentation searched (classification system followed by classification symbols)

H04B 7/185(2006.01); G01S 19/21(2010.01); H04J 11/00(2006.01); H04W 16/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 간섭(interference), 보로노이 다이어그램(voronoi diagram), 예측 (prediction)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2013-0244572 A1 (AGENCE SPATIALE EUROPEENNE) 19 September 2013 (2013-09-19)<br>See paragraphs [0038] and [0088]; and claims 1-12. | 1-9 |
| Y | US 2004-0110467 A1 (WANG, Arthur W.) 10 June 2004 (2004-06-10)<br>See paragraphs [0032], [0072]-[0073], [0128]-[0129] and [0164]; claim 1; and figures 1 and 14A-14C. | 1-9 |
| A | US 2017-0146664 A1 (GOOGLE INC.) 25 May 2017 (2017-05-25)<br>See paragraphs [0025]-[0048]; claims 1-20; and figures 1-5. | 1-9 |
| A | US 5926758 A (GRYBOS, David P. et al.) 20 July 1999 (1999-07-20)<br>See column 6, line 62 - column 11, line 43; claims 1-11; and figures 1-10. | 1-9 |
| A | CN 109600190 A (THE 10TH RESEARCH INSTITUTE OF CHINA ELECTRONICS TECHNOLOGY GROUP CORPORATION) 09 April 2019 (2019-04-09)<br>See paragraphs [0016]-[0029]; claims 1-10; and figures 1-3. | 1-9 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/013830** |

| Patent document cited in search report | | | Publication date (day/month/year) | Patent family member(s) | | | Publication date (day/month/year) |
| --- | --- | --- | --- | --- | --- | --- | --- |
| US | 2013-0244572 | A1 | 19 September 2013 | EP | 2632061 | A1 | 28 August 2013 |
| | | | | EP | 2632061 | B1 | 02 September 2020 |
| | | | | US | 9654201 | B2 | 16 May 2017 |
| US | 2004-0110467 | A1 | 10 June 2004 | DE | 60021483 | D1 | 01 September 2005 |
| | | | | DE | 60021483 | T2 | 08 June 2006 |
| | | | | EP | 1062747 | A1 | 27 December 2000 |
| | | | | EP | 1062747 | B1 | 27 July 2005 |
| | | | | JP | 2002-534901 | A | 15 October 2002 |
| | | | | JP | 3990111 | B2 | 10 October 2007 |
| | | | | US | 2007-0072603 | A1 | 29 March 2007 |
| | | | | US | 6678520 | B1 | 13 January 2004 |
| | | | | US | 7136620 | B2 | 14 November 2006 |
| | | | | US | 7627284 | B2 | 01 December 2009 |
| | | | | WO | 00-41340 | A1 | 13 July 2000 |
| US | 2017-0146664 | A1 | 25 May 2017 | CA | 3005733 | A1 | 26 May 2017 |
| | | | | CA | 3005733 | C | 29 August 2023 |
| | | | | EP | 3378171 | A1 | 26 September 2018 |
| | | | | EP | 3378171 | B1 | 29 April 2020 |
| | | | | US | 10277309 | B2 | 30 April 2019 |
| | | | | WO | 2017-087372 | A1 | 26 May 2017 |
| US | 5926758 | A | 20 July 1999 | EP | 0929950 | A1 | 21 July 1999 |
| | | | | EP | 1035663 | A2 | 13 September 2000 |
| | | | | EP | 1035663 | A3 | 19 December 2001 |
| | | | | WO | 98-09386 | A1 | 05 March 1998 |
| CN | 109600190 | A | 09 April 2019 | CN | 109600190 | B | 28 April 2020 |

Form PCT/ISA/210 (patent family annex) (July 2022)